# EUROPÄISCHE PATENTSCHRIFT

(11) **EP 3 067 628 B1**
(45) Veröffentlichungstag und Bekanntmachung des Hinweises auf die Patenterteilung: **11.07.2018**
(21) Anmeldenummer: 15158772.2
(22) Anmeldetag: 12.03.2015
(51) Int. Cl.: F24F 5/00, F24D 3/14, F24D 3/12, F24D 3/10

(54) **HYDRAULISCHES VENTIL**
HYDRAULIC VALVE
VANNE HYDRAULIQUE

(43) Veröffentlichungstag der Anmeldung: 14.09.2016
(73) Patentinhaber: Grundfos Holding A/S, 8850 Bjerringbro (DK)
(72) Erfinder: Sorensen, Soren Emil, 8860 Ulstrup (DK); Hovmand, Per, 8930 Randers NO (DK); Mikkelsen, Steen, 8850 Bjerringbro (DK); Milthers, Jens Kjaer, 9530 Stovring (DK); Jensen, Kim Hulegaard, 8840 Rodkaersbro (DK)
(74) Vertreter: Patentanwälte Vollmann & Hemmer

(56) Entgegenhaltungen:
- DE-A1-102006 010 562
- US-B1- 6 345 770

## Beschreibung

Die Erfindung betrifft einen hydraulischen Verteiler für ein hydraulisches Heizungs- und/oder Kühlsystem.

Hydraulische Verteiler werden beispielsweise in Heizungsanlagen mit mehreren Heizkreisen, insbesondere in Verbindung mit Fußbodenheizkreisen verwendet, um den Durchfluss eines flüssigen Wärmeträgers durch die einzelnen Heizkreise individuell regulieren zu können. Je nach Anzahl der zu versorgenden Heiz-/Kühlkreise sind dabei unterschiedlich dimensionierte Verteiler erforderlich. Um die Anzahl verschiedener Verteiler für unterschiedliche Anzahlen von Heiz-/Kühlkreisen zu reduzieren, ist es bekannt, derartige hydraulische Verteiler modular aufzubauen, wobei für jeden zu versorgenden Kreis ein Modul vorgesehen ist und die Module in der gewünschten Anzahl zu einem hydraulischen Verteiler miteinander verbunden werden können.

Für jeden der hydraulischen Kreise ist insbesondere eine separate Reguliereinrichtung, beispielsweise ein elektromotorisch angetriebenes Ventil erforderlich. Das bedeutet, dass bei einem modularen Aufbau des Verteilers nicht nur eine hydraulische Verbindung zwischen den Modulen sondern darüber hinaus auch ein elektrischer Anschluss jedes einzelnen Moduls erforderlich ist.

Beispielsweise aus US 6,345,770 B1 ist ein modularer Heiz-Verteiler bekannt, bei welchem für jeden Heizkreis ein Modul mit einer Reguliereinrichtung zur Regulierung des Durchflusses vorgesehen ist. Die Reguliereinrichtungen der einzelnen Module sind über elektrische Anschlussleitungen mit einem elektrischen Anschlussverteiler verbunden, welcher mit einer Steuereinrichtung verbunden ist. Ein ähnlicher Aufbau ist aus DE 10 2006 010 562 A1 bekannt. Bei dem aus diesem Stand der Technik bekannten Heiz-Verteiler sind Module vorgesehen, welche jeweils Reguliereinrichtungen für mehrere Heizkreise beinhalten. Auch diese Reguliereinrichtungen sind über elektrische Anschlussleitungen mit einer Steuereinrichtung verbunden. Insofern müssen neben den hydraulischen Verbindungen zusätzlich separat noch elektrische Verbindungen hergestellt werden.

Im Hinblick darauf ist es Aufgabe der Erfindung, einen hydraulischen Verteiler für ein hydraulisches Heizungs- und/oder Kühlsystem bereitzustellen, welcher einen einfachen elektrischen Anschluss einzelner Module des Verteilers ermöglicht.

Diese Aufgabe wird durch einen hydraulischen Verteiler mit den in Anspruch 1 angegebenen Merkmalen gelöst. Bevorzugte Ausführungsformen ergeben sich aus den Unteransprüchen, der nachfolgenden Beschreibung sowie den beigefügten Figuren.

Der erfindungsgemäße hydraulische Verteiler ist ausgebildet zur Verwendung in einem hydraulischen Heizungs- und/oder Kühlsystem, d.h. es handelt sich um einen hydraulischen Heizungs- und/oder Kühlverteiler. In einem derartigen Heizungs- und/oder Kühlsystem wird ein flüssiger Wärmeträger, insbesondere Wasser, verwendet, um die Wärme im System zu transportieren und Objekte bzw. Räume zu heizen oder zu kühlen. Ein derartiges hydraulisches System kann als reines Heizsystem ausgebildet sein, in dem beispielsweise Räume von einer zentralen Wärmequelle über ein hydraulisches System geheizt werden. Umgekehrt kann das System als Kühlsystem ausgelegt sein, in welchem Objekte über das hydraulische System von einer zentralen Kältequelle gekühlt werden. Darüber hinaus kann ein solches System als kombiniertes System ausgelegt sein, beispielsweise um im Winter zu heizen und im Sommer zu kühlen.

Der erfindungsgemäße hydraulische Verteiler ist modular aufgebaut, so dass er an unterschiedliche Anzahlen von Lastkreisen, beispielsweise Heiz- und/oder Kühlkreisen, anpassbar ist. Dazu weist der hydraulische Verteiler ein Hauptmodul sowie zumindest ein Lastmodul auf. Das Hauptmodul dient dem Anschluss des gesamten hydraulischen Verteilers. Das Lastmodul dient zum Anschluss zumindest eines Lastkreises und weist dazu zumindest einen hydraulischen Anschluss für einen Lastkreis sowie zumindest eine Reguliereinrichtung zum Regulieren des Durchflusses durch den an dem hydraulischen Anschluss angeschlossenen Lastkreis auf. Die Reguliereinrichtung kann beispielsweise ein elektromotorisch oder elektrothermisch betätigtes Ventil sein. Das Lastmodul ist so ausgebildet, dass es mit einem weiteren identisch ausgebildeten Lastmodul verbunden werden kann. Dies ermöglicht es, eine Mehrzahl von Lastmodulen miteinander zu verbinden bzw. aneinander zu reihen, um einen hydraulischen Verteiler gewünschter Länge, das heißt mit einer gewünschten Anzahl von Anschlüssen für Lastkreise auszubilden. Es ist jedoch zu verstehen, dass die Lastmodule auch derart ausgebildet sein können, dass sie jeweils den Anschluss einer Mehrzahl von Lastkreisen ermöglichen und dazu eine gewünschte Anzahl von Anschlüssen aufweisen. So können beispielsweise Lastmodule mit Anschlüssen für 4 Lastkreise vorgesehen werden, wobei dann durch Zusammenfügen zweier solcher Lastmodule ein hydraulischer Verteiler für 8 Lastkreise geschaffen werden kann. Für jeden Anschluss ist vorzugsweise eine Reguliereinrichtung vorgesehen. Dabei wird bevorzugt eine hydraulische Verbindung zwischen dem Hauptmodul und dem mit dem Hauptmodul verbundenen Lastmodul sowie ebenfalls zwischen den untereinander verbundenen Lastmodulen ausgebildet. Eine solche hydraulische Verbindung kann als Vorlauf oder als Rücklauf für die einzelnen Lastkreise ausgebildet sein. Besonders bevorzugt sind das Hauptmodul und die Lastmodule so ausgebildet, dass sie sowohl einen Vorlauf als auch einen Rücklauf aufweisen. Die Reguliereinrichtung kann im Vorlauf oder im Rücklauf des jeweiligen Lastmodules angeordnet sein. Wenn das Hauptmodul und die Lastmodule so ausgebildet sind, dass sie nur einen Strömungsweg, d. h. entweder Vorlauf oder Rücklauf aufweisen, so kann der jeweils andere Strömungsweg beispielsweise über einen separaten hydraulischen Verteiler verbunden sein.

Neben der beschriebenen hydraulischen Verbindung zwischen den einzelnen Modulen ist erfindungsgemäß eine elektrische Verbindung zwischen den Lastmodulen, insbesondere zum elektrischen Anschluss eines Antriebes der Lastmodule, vorgesehen. Dazu ist in dem zumindest einen Lastmodul eine Leiterplatte angeordnet, welche sich von einem ersten Ende zu einem zweiten Ende des Lastmoduls erstreckt. Vorzugsweise ist diese Erstreckungsrichtung dieselbe Richtung, in der mehrere Lastmodule aneinander gereiht werden können, das heißt die Längsrichtung des aus den Lastmodulen ausgebildeten hydraulischen Verteilers. Bevorzugt sind das erste und zweite Ende des Lastmoduls voneinander abgewandt bzw. entgegengesetzt gerichtet. Die Leiterplatte ist so ausgebildet, das sie an ihrem ersten und zweiten Ende zueinander korrespondierende elektrische Kupplungen aufweist. Diese sind bevorzugt mehrpolig. Die Kupplungen sind so ausgebildet, dass die elektrische Kupplung am zweiten Ende der Leiterplatte mit einer elektrischen Kupplung am ersten Ende eines weiteren identischen Lastmoduls elektrisch leitend in Eingriff treten kann. Das heißt die elektrische Kupplung am ersten Ende ist komplementär zu der elektrischen Kupplung am zweiten Ende ausgebildet, so dass, wenn zwei identische Lastmodule vorhanden sind, das erste Ende des einen Lastmoduls mit dem zweiten Ende des anderen Lastmoduls aneinander gefügt werden kann, wobei die komplementären elektrischen Kupplungen elektrisch leitend miteinander in Eingriff treten. Dadurch, dass die elektrischen Kupplungen direkt an einer Leiterplatte ausgebildet sind, vereinfacht sich der Aufbau des Lastmoduls, da so alle erforderlichen elektrischen Anschlüsse an einer Leiterplatte vereinigt werden können und eine so gefertigte Leiterplatte als vorgefertigtes Bauteil in ein Gehäuse eines Lastmoduls eingesetzt werden kann. Es sind keine weiteren Verkabelungen erforderlich.

Weiter bevorzugt weist auch das Hauptmodul eine elektrische Kupplung auf, welche komplementär zu der elektrischen Kupplung an einem Ende des Lastmoduls ausgebildet ist, so dass ein solches Lastmodul an das Hauptmodul angesetzt werden kann, wobei die elektrischen Kupplungen von Lastmodul und Hauptmodul elektrisch leitend in Eingriff treten. Die Kupplungen sind vorzugsweise als Steckkupplungen ausgebildet. So kann ein sehr einfacher elektrischer Anschluss erreicht werden, in dem die einzelnen Module, das heißt das Hauptmodul und ein angrenzendes Lastmodul sowie gegebenenfalls weitere Lastmodule einfach zusammengesteckt werden können. Bei dem Zusammenfügen wird so die direkt erforderliche elektrische Verbindung hergestellt, so dass der Montageaufwand gering ist, da eine separate elektrische Verkabelung nicht erforderlich ist.

Vorzugsweise weist eine der beiden elektrischen Kupplungen an dem ersten und dem zweiten Ende weibliche Kontakte und die andere elektrische Kupplung korrespondierende männliche Kontakte auf. Die weiblichen und die männlichen Kontakte können in bekannter Weise miteinander in Eingriff treten, wenn zwei entsprechend ausgebildete Lastmodule aneinander gefügt werden.

Gemäß einer bevorzugten Ausführungsform der Erfindung ist die Leiterplatte in ihrer Erstreckungsrichtung zwischen dem ersten und dem zweiten Ende elastisch verformbar bzw. federnd ausgebildet. Dies hat den Vorteil, dass Toleranzen ausgeglichen werden können und beim Aneinanderreihen mehrerer Lastmodule, wenn diese fest zusammengesteckt werden, Beschädigungen der Leiterplatte vermieden werden können, da die Leiterplatte in der Fügerichtung elastisch nachgeben kann. So kann einerseits eine sichere elektrische Verbindung an den elektrischen Kupplungen erreicht werden. Andererseits können elektrische Bauteile vor einer Beschädigung durch zu große Krafteinwirkung beim Zusammenfügen der elektrischen Kupplungen geschützt werden. Die Federwirkung der Leiterplatte resultiert bevorzugt aus einer entsprechenden Formgebung der Leiterplatte.

Bevorzugt weist die Leiterplatte einen mäanderförmigen Abschnitt auf, welcher die federnde Ausbildung bewirkt. Ein solcher mäanderförmiger Abschnitt kann beispielweise durch seitliche Einschnitte in die Leiterplatte ausgebildet werden, wobei zwischen den Einschnitten so eine gewundene bzw. mäanderförmige Struktur ausgebildet wird. Bei ausreichender Elastizität des Materials der Leiterplatte kann so eine elastische Verformung der einzelnen Windungen bzw. ist des mäanderförmigen Abschnittes möglich, so dass insgesamt eine Federwirkung in der Erstreckungsrichtung der Leiterplatte zwischen dem ersten und dem zweiten Ende erreicht wird.

In dem Lastmodul ist die Leiterplatte mit der Reguliereinrichtung bzw. dem elektrischen Antrieb der Reguliereinrichtung vorzugsweise mittels einer Steckverbindung elektrisch verbunden. Dies ermöglicht eine sehr einfache Montage des Lastmoduls, da die erforderlichen elektrischen Anschlüsse durch Steckverbindungen hergestellt werden können. Darüber hinaus ist eine solche Ausgestaltung sehr wartungsfreundlich, da die Steckverbindung wieder getrennt werden kann, beispielsweise um eine Reguliereinrichtung oder deren Antrieb austauschen zu können.

Die Leiterplatte trägt vorzugsweise eine elektronische Modulsteuereinrichtung bzw. elektronische Bauteile, welche eine solche Modulsteuereinrichtung bilden, wobei die Modulsteuereinrichtung zur Kommunikation mit einer Verteiler-Steuereinrichtung dient, welche vorzugsweise in dem Hauptmodul angeordnet ist und zur Ansteuerung der Reguliereinrichtung ausgebildet ist. Die Verteiler-Steuereinrichtung ist vorzugsweise so ausgebildet, dass sie den Öffnungsgrad für die Reguliereinrichtung des Lastmoduls vorgibt. Besonders bevorzugt ist die Verteiler-Steuereinrichtung so ausgebildet, dass sie eine Mehrzahl von Lastmodulen bzw. deren Reguliereinrichtungen ansteuern kann. Die Verteiler-Steuereinrichtung kann dazu beispielsweise mit Raumthermostaten in zu temperierenden Räumen zusammen wirken und basierend auf den Temperatursignalen dieser Raumthermostate den Öffnungsgrad für die einzelnen Reguliereinrichtungen vorgeben. Die zentrale Ansteuerung der einzelnen Reguliereinrichtungen mehrerer Lastmodule hat dabei den Vorteil, dass die Reguliereinrichtungen energieoptimiert angesteuert werden können, so dass beispielsweise jeweils immer nur ein Antrieb einer Reguliereinrichtung gleichzeitig in Betrieb ist, so dass der Gesamtstrom für die Antriebe der Reguliereinrichtungen gering gehalten werden kann. Die Modulsteuereinrichtungen dienen dazu, die Steuersignale von der Verteiler-Steuereinrichtung zu empfangen und die zugehörige Reguliereinrichtung des Lastmoduls anzusteuern. Die Modulsteuereinrichtung bildet somit eine Kommunikationsschnittstelle des Lastmoduls zu der Verteiler-Steuereinrichtung. Insbesondere können die Steuersignale von der Verteiler-Steuereinrichtung an die einzelnen Lastmodule über ein Bussystem übertragen werden, mit welchem die Modulsteuereinrichtungen mehrerer Lastmodule verbunden sind. Dadurch, dass die elektronischen Bauteile der Modulsteuereinrichtung auf der Leiterplatte angeordnet sind, welche ebenfalls die elektrischen Kupplungen aufweist, wird ein sehr einfacher elektrischer Anschluss ermöglicht, da die wesentlichen elektronischen Elemente des Lastmoduls so auf der Leiterplatte vereinigt und vormontiert werden können.

Besonders bevorzugt sind die elektrischen Kupplungen an dem ersten und dem zweiten Ende des Lastmoduls über die Leiterplatte derart verbunden, dass elektrische Signale von der elektrischen Kupplung an einem der Enden zu der elektrischen Kupplung an dem anderen Ende durchgeleitet werden. Dies ermöglicht es eine Vielzahl derartig ausgebildeter Lastmodule durch Ineinanderstecken der elektrischen Kupplungen an den einander zugewandten Enden der Lastmodule aneinander zu reihen. Über die elektrischen Kupplungen und die Leiterplatten wird so eine durchgehende elektrische Verbindung durch alle aneinandergereihten Lastmodule erreicht. Dabei sind die elektrischen Verbindungen vorzugsweise so ausgebildet, dass alle Lastmodule mit Energie versorgt werden und darüber hinaus elektrische Steuersignale durch das Lastmodul an ein folgendes Lastmodul durchgeleitet werden können. So kann insbesondere ein Datenbus ausgebildet werden, welcher sich über mehrere aneinandergereihter Lastmodule erstrecken kann, um die Modulsteuereinrichtungen dieser Lastmodule, wie sie vorangehend beschrieben wurden, mit einer Verteiler-Steuereinrichtung zur Datenkommunikation zu verbinden.

Die Verteiler-Steuereinrichtung ist vorzugsweise in das Hauptmodul integriert. Dort kann sie weiter bevorzugt in die elektronische Steuereinrichtung einer in dem Hauptmodul angeordneten Umwälzpumpe integriert sein. Dadurch wird der Aufbau weiter vereinfacht, da so wesentliche elektronische Komponenten bzw. Steuereinrichtungen zusammengefasst werden können.

Gemäß einer weiteren bevorzugten Ausführungsform ist in dem zumindest einen Lastmodul zumindest ein Sensor angeordnet, welcher mit der Leiterplatte elektrisch verbunden ist und weiter bevorzugt direkt auf der Leiterplatte angeordnet ist. Bei diesem Sensor kann es sich insbesondere um einen Temperatursensor handeln, welcher die Temperatur an oder in einem der hydraulischen Anschlüsse bzw. in einem der Strömungswege in dem Lastmodul direkt oder indirekt erfasst. Das Lastmodul kann weiter bevorzugt dazu eine Modulsteuereinrichtung, insbesondere eine Modulsteuereinrichtung, wie sie vorangehend beschrieben wurde, aufweisen, welche die Signale des zumindest einen Sensors erfasst und an eine Verteiler-Steuereinrichtung, welche insbesondere in dem Hauptmodul angeordnet sein kann, überträgt. Auch dazu kann eine elektrische Verbindung insbesondere ein Datenbus, welcher in der beschriebenen Weise von der Leiterplatte gebildet wird, verwendet werden. Die Signale bzw. Messwerte des zumindest einen Sensors können dann vorzugsweise von der Verteiler-Steuereinrichtung zur Steuerung bzw. Regelung der zugehörigen Reguliereinrichtung des Lastmoduls verwendet werden.

Das zumindest eine Lastmodul weist weiter bevorzugt ein Modulgehäuse auf, in welchem ein Aufnahmeraum ausgebildet ist, in welchem die Leiterplatte eingesetzt ist, wobei der Aufnahmeraum an den beiden Enden Kupplungsöffnungen aufweist, durch welche die elektrischen Kupplungen an der Leiterplatte sich nach außen erstrecken oder von außen zugänglich sind. Dies ermöglicht einen besonders einfachen Aufbau, da nach Einsetzten der Leiterplatte in das Modulgehäuse die erforderlichen elektrischen Kupplungen bzw. Anschlüsse des gesamten Lastmoduls an den beiden Enden des Modulgehäuses ausgebildet sind, ohne das weitere elektrische Verbindungen zwischen den elektrischen Anschlüssen an der Außenseite des Modulgehäuses und der Leiterplatte hergestellt werden müssen. Die Kupplungen der Leiterplatte bilden direkt an den Außenseiten des Lastmoduls gelegene Verbindungstecker. Das Modulgehäuse definiert in seinem Inneren vorzugsweise darüber hinaus zumindest eine hydraulische Verbindung bzw. einen hydraulischen Strömungsweg. Das Modulgehäuse ist vorzugsweise als Spritzgussteil aus Kunststoff gefertigt.

Bevorzugt ist in dem Modulgehäuse zumindest ein hydraulischer Strömungsweg ausgebildet und der Aufnahmeraum für die Leiterplatte ist von dem hydraulischen Strömungsweg getrennt. So ist die Leiterplatte in dem Aufnahmeraum geschützt, insbesondere vor Kontakt mit dem in dem hydraulischen Strömungsweg strömenden Medium, beispielsweise Wasser.

Gemäß einer weiteren bevorzugten Ausführungsform weist das Modulgehäuse einen mit dem hydraulischen Strömungsweg verbundenen Antriebsaufnahmeraum auf, in welchen die Reguliereinrichtung bzw. der elektrische Antrieb der Reguliereinrichtung angeordnet ist. Die Reguliereinrichtung kann als vorgefertigte Einheit, insbesondere als Einheit von Antrieb und Ventilelement in den Antriebsaufnahmeraum eingesetzt sein. Allerdings ist auch ein mehrteiliger Aufbau möglich. So kann die Reguliereinrichtung beispielsweise eine Ventileinrichtung und einen Antrieb aufweisen, welche über eine Kupplung so miteinander verbunden sind, dass der Antrieb von der Reguliereinrichtung getrennt werden kann. Dies kann zur Reparaturzwecken von Vorteil sein. Weiter bevorzugt ist zwischen der Reguliereinrichtung und dem Antriebsaufnahmeraum zumindest ein Dichtungselement, insbesondere ein O-Ring vorgesehen, welcher den hydraulischen Strömungsweg nach außen abdichtet. Der Aufnahmeraum für die Leiterplatte, welcher vorangehend beschrieben wurde, ist vorzugsweise ebenfalls von dem Antriebsaufnahmeraum getrennt, so dass auch bei einer Leckage der beschriebenen Dichtung keine Feuchtigkeit aus dem Strömungsweg in den Aufnahmeraum, in welchem die Leiterplatte mit den elektrischen bzw. elektronischen Komponenten gelegen ist, eindringen kann.

Die Reguliereinrichtung bzw. deren elektrischer Antrieb ist weiter bevorzugt mit der Leiterplatte über ein außerhalb des Modulgehäuses angeordnetes Anschlusselement elektrisch verbunden, wobei der Aufnahmeraum für die Leiterplatte vorzugsweise eine Anschlussöffnung aufweist, durch welche das Anschlusselement sich zu der Leiterplatte erstreckt. Der Antriebsaufnahmeraum weist vorzugsweise ebenfalls eine Öffnung auf, durch welche das Anschlusselement mit der Reguliereinrichtung bzw. dem elektrischen Antrieb der Reguliereinrichtung verbunden werden kann. Dabei sind die Anschlussöffnung des Aufnahmeraumes und die Öffnung des Antriebsaufnahmeraumes vorzugsweise jeweils nach außen geöffnet und nicht direkt miteinander verbunden. Das Anschlusselement ist vorzugsweise so ausgebildet, dass es eine elektrische Steckverbindung zu der Leiterplatte und/oder eine elektrische Steckverbindung zu der Reguliereinrichtung hin aufweist, so dass eine einfache Montage möglich ist. Durch ein solches von außen eingesetztes Anschlusselement wird es möglich, auf eine direkte Verbindung zwischen dem Aufnahmeraum und dem Antriebsaufnahmeraum zu verzichten, so dass in der beschriebenen Weise die Leiterplatte in dem Aufnahmeraum vor dem Kontakt mit Feuchtigkeit aus dem Strömungsweg geschützt wird.

Die Reguliereinrichtung ist bevorzugt ein elektrisch angetriebenes Ventil oder eine elektrisch angetriebene Pumpe. Das elektrisch angetriebene Ventil kann z.B. ein elektromotorisch angetriebenes Ventil, insbesondere ein über einen elektrischen Schrittmotor angetriebenes Ventil sein. Es kann jedoch beispielsweise auch ein elektromagnetisches Ventil oder ein elektrothermisch angetriebenes Ventil Verwendung finden. Die Ventile sind vorzugsweise so ausgebildet, dass sie in ihrem Öffnungsgrad veränderbar sind, wobei dies über eine Ansteuerung des elektrischen Antriebes über die Verteiler-Steuereinrichtung erfolgen kann. Dazu wird vorzugsweise ein Sollöffnungsgrad von der Verteiler-Steuereinrichtung an die Modulsteuereinrichtung übertragen, welche dann den jeweiligen Antrieb der Reguliereinrichtung so ansteuert oder regelt, dass der gewünschte Ventilöffnungsgrad erreicht wird. Für den Fall, dass eine elektrisch angetriebene Pumpe verwendet wird, ist diese vorzugsweise in ihrer Drehzahl regelbar, wobei die Drehzahlregelung dann vorzugsweise von der beschriebenen Verteiler-Steuereinrichtung vorgenommen wird, wobei erforderliche Drehzahlensignale von der Verteiler-Steuereinrichtung vorzugsweise an eine Modulsteuereinrichtung des jeweiligen Lastmoduls übertragen werden und die Modulsteuereinrichtung dann eine angeschlossene Pumpe mit der gewünschten Drehzahl ansteuert bzw. die Drehzahlen den Differenzdruck oder den Durchfluss auf einen gewünschten Sollwert regelt.

Gemäß einer weiteren bevorzugten Ausführungsform der Erfindung weist das zumindest eine Lastmodul zumindest einen sich von dem ersten zu dem zweiten Ende erstreckenden Strömungsweg auf, welcher über die Reguliereinrichtung mit dem zumindest einen hydraulischen Anschluss verbunden ist. Bei diesem Strömungsweg kann es sich um einen Vorlauf oder einen Rücklauf handeln, wobei der hydraulische Anschluss entsprechend ein Vorlauf- oder Rücklaufanschluss für einen anzuschließenden Lastkreis ist. Der beschriebene Strömungsweg verbindet so zwei voneinander abgewandte Enden des Lastmoduls insbesondere zwei voneinander abgewandte Axialenden des Lastmoduls so miteinander, dass bei Aneinanderreihung mehrerer Lastmodule ein sich durch die mehreren Lastmodule erstreckender durchgehender Strömungsweg gebildet wird, welcher eine Verbindung zu einem hydraulischen Strömungsweg in dem Hauptmodul herstellt. Auf diese Weise können verschiedene Lastkreise über jeweils ein Lastmodul hydraulisch mit dem Hauptmodul verbunden werden. In dem Lastmodul ist dann jeweils zumindest ein Abzweig von diesem durchgehenden Strömungsweg zu dem hydraulischen Anschluss vorgesehen.

Es ist zu verstehen, dass die Lastmodule vorzugsweise zum Anschluss jeweils eines einzelnen Lastkreises vorgesehen sind. Es sind jedoch auch Lastmodule möglich, welche Anschlüsse für mehrere Lastkreise aufweisen, wobei in dem Lastmodul dann vorzugsweise mehrere Reguliereinrichtungen für die mehreren Lastkreise angeordnet sind. Auch derartige Lastmodule, welche zum Anschluss mehrerer Lastkreise dienen, können in der beschriebenen Weise so ausgebildet sein, dass sie aneinandergefügt werden können, um einen hydraulischen Verteiler mit einer gewünschten Anzahl von Anschlüssen für Lastkreise auszubilden.

Weiter bevorzugt weist das zumindest ein Lastmodul einen ersten hydraulischen Strömungsweg und einen zweiten hydraulischen Strömungsweg auf, welcher sich jeweils von dem ersten zu dem zweiten Ende erstrecken und jeweils mit zumindest einem hydraulischen Anschluss des Lastmoduls zum Anschluss eines Lastkreises in Verbindung stehen. Die Reguliereinrichtung liegt dabei in der Verbindung zwischen einem der Strömungswege und einem zugehörigen hydraulischen Anschluss des Lastmodules. Dies kann wie beschrieben ein Vorlauf oder ein Rücklauf sein. Einer der beiden hydraulischen Strömungswege bildet dabei den Vorlauf und der andere hydraulische Strömungsweg bildet den Rücklauf. Entsprechend bildet ein hydraulischer Anschluss einen Vorlaufanschluss und der andere hydraulische Anschluss einen Rücklaufanschluss für einen mit dem Lastmodul zu verbindenden Lastkreis. Die hydraulischen Strömungswege sind in dem Lastmodul vorzugsweise vollständig voneinander getrennt.

Bevorzugt endet der zumindest eine Strömungsweg in dem zumindest einen Lastmodul an dem ersten Ende in einer ersten hydraulischen Kupplung und an dem zweiten Ende in einer zweiten hydraulischen Kupplung und die erste und die zweite hydraulische Kupplung sind derart korrespondierend zueinander ausgebildet, dass die zweite hydraulische Kupplung am zweiten Ende des Lastmoduls mit der ersten hydraulischen Kupplung am ersten Ende eines identisch ausgebildeten zweiten Lastmoduls fluidleitend verbindbar ist. So können mehrere Lastmodule aneinander gereiht werden, wobei die hydraulischen Kupplungen so miteinander in Eingriff treten, dass ein durchgehender nach außen abgedichteter Strömungsweg von einem zu dem nächsten Lastmodul gebildet wird. Das erste Lastmodul wird bevorzugt über eine hydraulische Kupplung entsprechend mit dem Hauptmodul und einem in dem Hauptmodul ausgebildeten Strömungsweg verbunden. So können bei Aneinanderreihung mehrerer Lastmodule alle diese Lastmodule in Reihe mit dem Hauptmodul hydraulisch verbunden werden. Für den Fall, dass in den Lastmodulen ein erster und ein zweiter hydraulischer Strömungsweg ausgebildet sind, weisen diese an ihren Enden jeweils entsprechend ausgebildete hydraulische Kupplungen auf, so dass bei Aneinanderreihung mehrerer Lastmodule jeweils die ersten Strömungswege und die zweiten Strömungswege so untereinander verbunden werden, dass ein sich durch alle Lastmodule erstreckender erster Strömungsweg und ein durch alle Lastmodule erstreckender zweiter Strömungsweg gebildet wird. Das erste, an das Hauptmodul angrenzende Lastmodul, wird dabei vorzugsweise mit einem ersten Strömungsweg und mit einem zweiten Strömungsweg in dem Hauptmodul verbunden. So können über die Lastmodule Vor- und Rücklauf der einzelnen Lastkreise mit einem Vor- und Rücklauf in dem Hauptmodul verbunden werden, wobei beispielsweise der erste Strömungsweg den Vorlauf und der zweite Strömungsweg den Rücklauf bildet.

Besonders bevorzugt weist der hydraulische Verteiler ein Hauptmodul und mehrere Lastmodule, welche in der vorangehend beschriebenen Weise ausgebildet sind, auf, wobei die Lastmodule so aneinander gefügt sind, dass jeweils ein zweites Ende eines ersten Lastmoduls mit dem ersten Ende eines darauffolgenden zweiten Lastmoduls in Eingriff ist. Eines der Lastmodule ist in entsprechender Weise mit dem Hauptmodul verbunden. Die Verbindungen zwischen den einzelnen Lastmodulen sowie zwischen dem Lastmodul und dem Hauptmodul sind vorzugsweise lösbar ausgebildet, so dass einzelne dieser Lastmodule gegebenenfalls ausgetauscht werden können oder das Hauptmodul gegebenenfalls ausgetauscht werden kann.

Nachfolgend wir die Erfindung beispielhaft anhand der beigefügten Figuren beschrieben. In diesen zeigt:

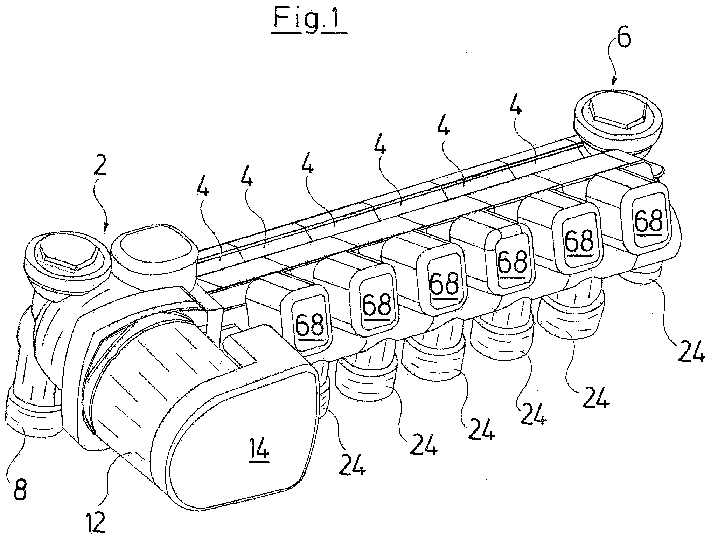

- Fig. 1: eine perspektivische Gesamtansicht eines erfindungsgemäßen hydraulischen Verteilers,

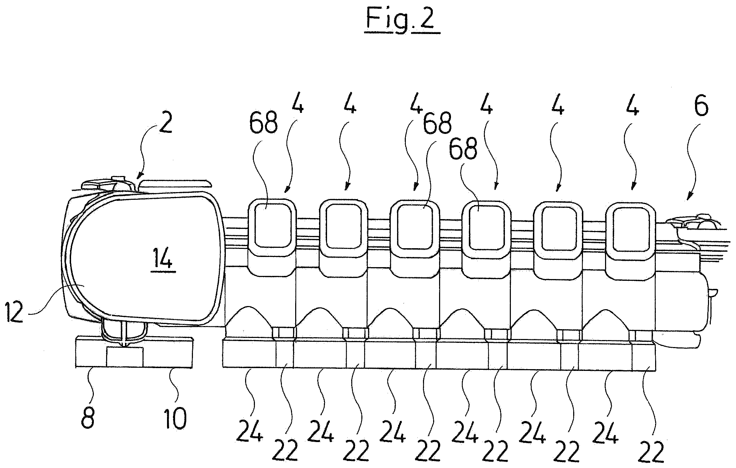

- Fig. 2: eine Frontansicht des Verteilers gemäß Fig. 1,

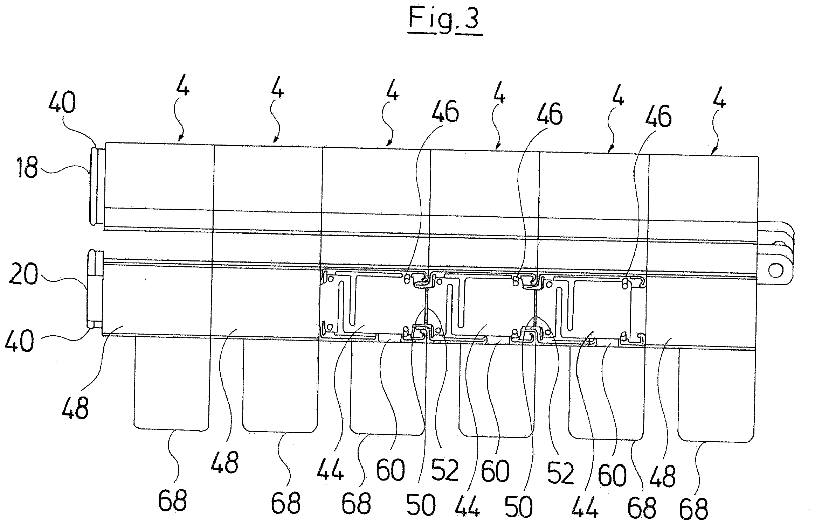

- Fig. 3: eine Draufsicht auf eine Anordnung von Lastmodulen des hydraulischen Verteilers gemäß Fig. 1 und 2 im teilweise geöffneten Zustand,

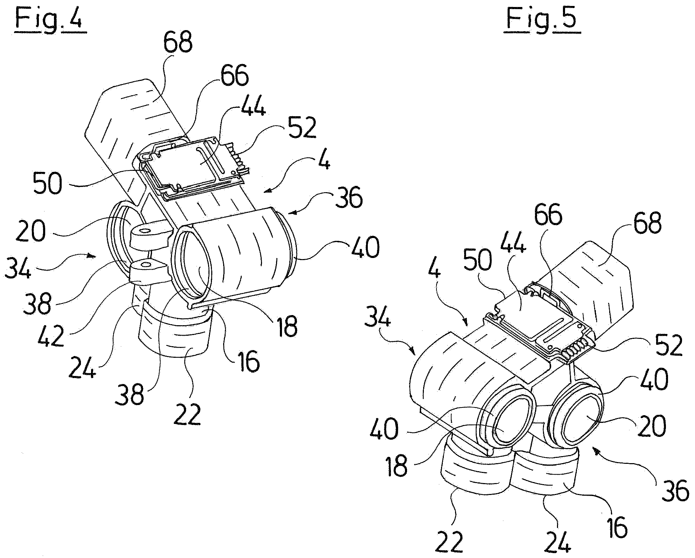

- Fig. 4: eine perspektivische Ansicht eines Lastmoduls im teilweise geöffneten Zustand,
- Fig. 5: eine perspektivische Ansicht des Lastmoduls gemäß Fig. 2 von der entgegengesetzten Seite her gesehen,

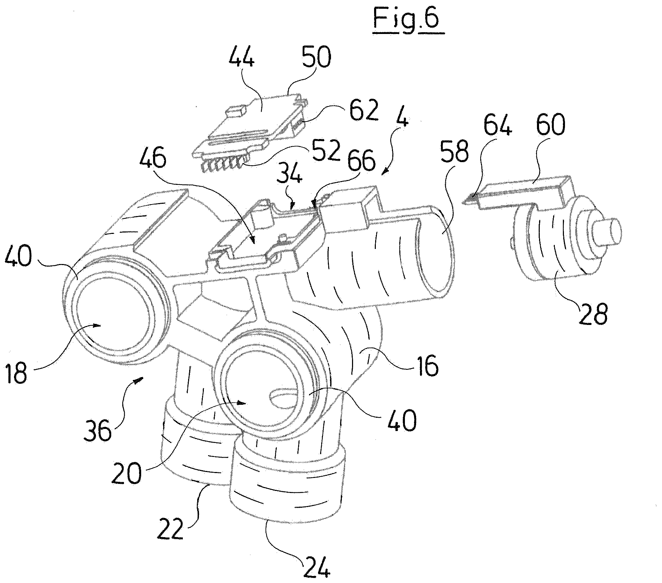

- Fig. 6: eine Explosionsansicht des Lastmoduls gemäß Fig. 4 und 5,
- Fig. 7: eine Schnittansicht des Lastmoduls gemäß Fig. 4 bis 6 und
- Fig. 8: eine Draufsicht auf die Leiterplatte und die Reguliereinrichtung des Lastmoduls gemäß Fig. 4 bis 7.

Der hier beispielhaft beschriebene hydraulische Verteiler ist ausgebildet zum Einsatz in einer hydraulischen Heizungs- und/oder Kühlanlage, in welcher Wärme über einen flüssigen Wärmeträger, insbesondere Wasser transportiert wird. Dabei kann entweder Wärme von einer zentralen Wärmequelle zu mehreren Verbrauchern transportiert werden oder im Falle eines Kühlsystems von den mehreren Verbrauchern zu einer zentralen Kühleinrichtung abgeführt werden.

Der gezeigte hydraulische Verteiler ist modular aufgebaut und weist ein Hauptmodul 2 und im gezeigten Beispiel sechs Lastmodule 4 auf. Die Lastmodule 4 sind alle identisch ausgebildet. Es ist zu verstehen, dass anstatt einer Anordnung von sechs Lastmodulen auch mehr oder weniger Lastmodule in entsprechender Weise aneinander gereiht werden können. Ein erstes Lastmodul 4 ist mit dem Hauptmodul 2 verbunden. Die übrigen Lastmodule sind in Reihe hintereinander an dieses erste Lastmodul 4 angesetzt. Das letzte Lastmodul 4 ist durch ein Abschlussmodul 6 an der dem Hauptmodul 2 abgewandten Seite verschlossen. Der hydraulische Verteiler dient der Verteilung eines flüssigen Wärmeträgers auf mehrere Lastkreise und weist dazu in dem hier gezeigten Beispiel einen Vor- und einen Rücklauf auf. Das Hauptmodul 2 weist einen Eingang 8 für den Vorlauf und einen Ausgang 10 für den Rücklauf auf. Im Inneren des Hauptmoduls 2 sind zwei voneinander getrennte Strömungswege ausgebildet, welche von dem Eingang 8 und dem Ausgang 10 zu derjenigen Seitenfläche des Hauptmoduls 2 verlaufen, welche den Lastmodulen 4 zugewandt ist. An dieser Seitenfläche sind hydraulische Kupplungen zur Verbindung des Vorlaufes und des Rücklaufes mit den Lastmodulen 4 vorhanden, wie sie nachfolgend beschrieben werden. Das Hauptmodul 2 weist darüber hinaus ein Umwälzpumpenaggregat 12 auf, dessen Laufrad in dem an den Eingang 8 angrenzenden ersten Strömungsweg, welcher den Vorlauf bildet, gelegen ist. Das Umwälzpumpenaggregat 12 weist ein Elektronikgehäuse 14 auf, in welchem eine Verteiler-Steuereinrichtung angeordnet ist, welche zum einen die Drehzahl des Umwälzpumpenaggregates 12 sowie zum anderen die einzelnen Lastmodule 4 steuert. Dazu kann gemäß einer bevorzugten Ausführungsform das Hauptmodul 2 ein Temperatursignal von zumindest einem Temperatursensor empfangen, wobei die Steuerung der Lastmodule sowie gegebenenfalls des Umwälzpumpenaggregates auf Grundlage dieses Temperatursignals erfolgt. Weiter bevorzugt können mehrere Temperatursensoren, beispielsweise Raumtemperatursensoren, vorgesehen sein, welche Temperatursignale an das Hauptmodul 2 übertragen. Beispielsweise können Raumtemperatursensoren in Räumen oder Gebäudeteilen angeordnet sein, welche über die Lastmodule temperiert werden. So ist es möglich, jedes Lastmodul 4 in Abhängigkeit eines individuellen Temperatursignals zu steuern.

Die einzelnen Lastmodule 4 weisen jeweils ein Modulgehäuse 16 auf, welches vorzugsweise als einteiliges Kunststoffbauteil ausgebildet ist. In dem Modulgehäuse 16 sind ein erster Strömungsweg 18 und ein zweiter Strömungsweg 20 ausgebildet, von welchen der erste Strömungsweg 18 beispielsweise den Vorlauf und der zweite Strömungsweg 20 den Rücklauf bildet. Der erste Strömungsweg 18 ist mit einem ersten hydraulischen Anschluss 22 und der zweite Strömungsweg 20 mit einem zweiten hydraulischen Anschluss 24 verbunden. Der erste hydraulische Anschluss 22 bildet somit einen Vorlaufanschluss für einen Lastkreis und der zweite hydraulische Anschluss vorzugsweise einen Rücklaufanschluss für diesen Lastkreis. In der Verbindung zwischen dem ersten Strömungsweg 18 und dem ersten hydraulischen Anschluss 22 ist ein Ventil 26 gelegen, über welches der freie Strömungsquerschnitt von dem ersten Strömungsweg 18 in den ersten hydraulischen Anschluss 22 eingestellt werden kann. Das Ventil 26 bildet Teil einer Reguliereinrichtung und ist mit einem Antriebsmotor 28 verbunden. Der Antriebsmotor 28 treibt das Ventil 26 drehend an, wobei über einen Spindeltrieb 30 das Ventilelement 32 vor und zurück bewegt und von einem Ventilsitz 33 außer Anlage und wieder in Anlage bewegbar ist.

Der erste Strömungsweg 18 und der zweite Strömungsweg 20 erstrecken sich parallel in Längsrichtung durch das Lastmodul 4 hindurch von einem ersten Ende 34 zu einem entgegengesetzten zweiten Ende 36. An dem ersten Ende 34 enden der erste Strömungsweg 18 sowie der zweite Strömungsweg 20 jeweils in einer ersten hydraulischen Kupplung 38. Am entgegengesetzten zweiten Ende 36 enden der erste Strömungsweg 18 und der zweite Strömungsweg 20 jeweils in einer zweiten hydraulischen Kupplung 40. Dabei ist die erste hydraulische Kupplung 38 als weibliches Kupplungselement ausgebildet, während die zweite hydraulische Kupplung 40 jeweils als männliches Kupplungselement ausgebildet ist. Es wäre jedoch auch eine umgekehrte Ausgestaltung oder eine axiale Anlage der Kupplungen aneinander möglich. Wenn die Lastmodule 4 in der gezeigten Weise aneinander gereiht bzw. aneinandergesteckt werden, treten die zweiten hydraulischen Kupplungen 40 eines Lastmodules 4 mit dem ersten hydraulischen Kupplungen 38 eines benachbarten Lastmoduls 4 in dichtenden Eingriff, so dass durch die beiden Lastmodule 4 hindurch ein durchgehender erster Strömungsweg 18 und ein durchgehender zweiter Strömungsweg 20 gebildet werden. Das Hauptmodul 2 ist mit entsprechenden ersten hydraulischen Kupplungen 38 versehen, in welche die zweiten hydraulischen Kupplungen 40 des ersten Lastmoduls 4 eingreifen können, um eine hydraulische Verbindung zwischen dem ersten Strömungsweg 18 und dem zweiten Strömungsweg 20 zu den entsprechenden Strömungswegen im Inneren des Hauptmoduls 2 und dessen Anschlüssen 8 und 10 (Eingang 8 und Ausgang 10) herzustellen.

Neben den beschriebenen hydraulischen Verbindungen zwischen den einzelnen Lastmodulen 4 sind ferner mechanische Verbindungen 42 vorhanden, um die einzelnen Lastmodule 4 mechanisch miteinander zu verbinden. Die mechanischen Verbindungen 42 können in verschiedenster Weise ausgebildet sein und zusätzlich über Bolze, Klammern, Schrauben oder ähnliches gesichert sein. Alternativ könnten die hydraulischen Kupplungen 38 und 40 mechanisch derart stabil ausgebildet sein, dass auf zusätzliche mechanische Verbindungen 42 verzichtet werden kann.

Neben den beschriebenen hydraulischen und mechanischen Verbindungen werden darüber hinaus elektrische Verbindungen zwischen den Lastmodulen 4 hergestellt. Die Lastmodule 4 weisen dazu jeweils eine Leiterplatte 44 auf, welche in dem Modulgehäuse 16 in einem Aufnahmeraum 46 angeordnet ist. Der Aufnahmeraum 46 ist durch einen Deckel 48 verschlossen.

Die Leiterplatte 44 ist so ausgebildet, dass sie sich von dem ersten Ende 34 zu dem zweiten Ende 36 des Lastmoduls 4 erstreckt. Dabei weist die Leiterplatte 44 an ihrem ersten Ende eine erste elektrische Steckkupplung 50 auf, welche in diesem Beispiel als weibliche Kupplung ausgebildet ist. Am entgegengesetzten zweiten Ende weist die Leiterplatte 44 eine zweite elektrische Steckkupplung 50 auf, welche in diesem Beispiel als männliche Kupplung ausgebildet ist. Auch eine umgekehrte Ausgestaltung wäre möglich. Die erste elektrische Steckkupplung 50 und die zweite elektrisch Steckkupplung 52 sind mehrpolig ausgebildet und komplementär zueinander gestaltet, so dass die elektrischen Steckkontakte der ersten eklektischen Steckkupplung und der zweiten elektrischen Steckkupplung 52 zweier benachbarter Lastmodule 4 miteinander elektrisch leitend in Eingriff treten können. Der Aufnahmeraum 46 weist dazu an dem ersten Ende 34 und an dem zweiten Ende 36 jeweils eine Öffnung auf, welche durch den Deckel 48 nicht verschlossen sind, so dass benachbarte erste elektrische Steckkupplungen 50 und zweite elektrische Steckkupplungen 52 elektrisch leitend miteinander in Eingriff treten können. Die Leiterplatten 44 benachbarter Lastmodule 4 können so eine durchgehende elektrische Verbindung zwischen allen aneinandergereihten Lastmodulen 4 herstellen. Bevorzugt sind dazu auf den Leiterplatten 44 Leiterbahnen ausgebildet, welche ein Bussystem bilden, so dass alle Lastmodule 4 mit Energie versorgt werden können und darüber hinaus von der Verteiler-Steuereinrichtung in dem Elektronikgehäuse 1 des Hauptmoduls 2 gesteuert werden können. Dazu ist über das beschriebene Bussystem eine Datenkommunikation zwischen den auf den Leiterplatten 44 ausgebildeten ModulSteuereinrichtungen und der Verteiler-Steuereinrichtung in dem Elektronikgehäuse 14 vorgesehen. Die elektronischen Bauteile der Verteiler-Steuereinrichtung sind vorzugsweise mit elektrischen Anschlüssen in dem Hauptmodul 2 verbunden, welche mit der zweiten elektrischen Steckkupplung 52 des ersten Lastmodules 4, welches an das Hauptmodul 2 angrenzt, elektrisch leitend in Verbindung treten. Alternativ kann eine Kabelverbindung vorgesehen sein.

An den Leiterplatten 44 ist darüber hinaus jeweils ein Sensor 53 ausgebildet, welcher beispielsweise ein Infrarot-Temperatursensor sein kann, welcher die Temperatur in dem Modulgehäuse oder einem der Strömungswege erfasst. Die von dem Sensor erfassten Sensorsignale werden von der Modulsteuereinrichtung über das beschriebene Bussystem an die Verteiler-Steuereinrichtung übertragen.

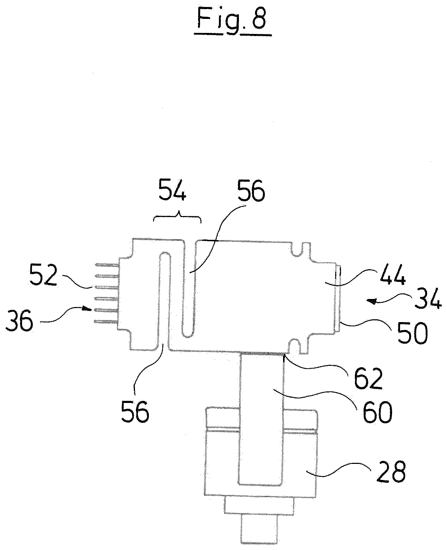

Die Leiterplatten 44 sind in ihrer Längsrichtung von dem ersten Ende 34 zu dem zweiten Ende 36 federnd ausgebildet. Dazu weisen die Leiterplatten 44 jeweils einen mäanderförmig geformten elastischen Abschnitt 54 auf. Dieser in Fig. 8 gekennzeichnete federnde bzw. elastische Abschnitt 54 ist in diesem Ausführungsbeispiel durch zwei von entgegengesetzten Seiten her in die Leiterplatte 44 eingebrachten Einschnitten 56 gebildet, welche zu einem mäanderförmigen bzw. gewundenen Verlauf der Leiterplatte in dem elastischen Abschnitt 54 führen. Der elastische Abschnitt 54 bewirkt, dass die Leiterplatte 44 sich, wenn eine Druckkraft auf die erste elektrische Steckkupplung 50 und die zweite elektrische Steckkupplung 52 aufgebracht wird, elastisch stauchen lässt. Dadurch kann sichergestellt werden, dass wenn zwei Lastmodule 4 aneinander gereiht werden, die Steckkupplungen 50 und 52 zum einen sicher in Eingriff treten können und zum anderen es dabei nicht zu einer plastischen Verformung oder Beschädigung der Leiterplatten 44 bei zu großer Krafteinwirkung kommt. Darüber hinaus können so Fertigungstoleranzen ausgeglichen werden.

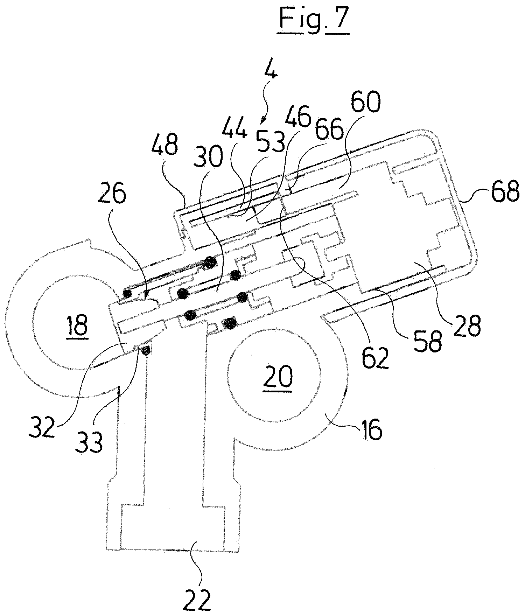

Wie in Fig. 7 zu erkennen ist, ist der Aufnahmeraum 46, in welchem die Leiterplatte 44 gelegen ist, vollständig von den Strömungswegen 18 und 20 und dem Bereich, in dem das Ventil 26 gelegen ist, getrennt. So ist die Leiterplatte 44 sicher vor Feuchtigkeit geschützt. Der Antriebsmotor 28 ist in einem Antriebsaufnahmeraum 58 angeordnet, welcher ebenfalls keine direkte Verbindung zu dem Aufnahmeraum 46 hat, in welchem die Leiterplatte 44 gelegen ist. Der Antriebsmotor bzw. Antrieb 28 ist vielmehr über ein Anschlusselement 60 mit der Leiterplatte 44 verbunden. An der Leiterplatte 44 ist dazu eine dritte Steckkupplung 62 angeordnet, deren Steckrichtung in diesem Ausführungsbeispiel rechtwinklig zu der Steckrichtung der ersten elektrischen Kupplung 50 und der zweiten eklektischen Kupplung 52 gerichtet ist. In die dritte Steckkupplung 62 greift das Anschlusselement 60 mit korrespondierenden Steckkontakten 64 ein. Dabei erstreckt sich das Anschlusselement 60 durch eine Öffnung 66 in den Aufnahmeraum 46 hinein. Die Öffnung 66 ist jedoch nicht direkt dem Inneren des Antriebsaufnahmeraums 46 zugewandt, sondern vielmehr zur Außenseite des Modulgehäuses 16 geöffnet. So wird sichergestellt, dass selbst bei einer Undichtigkeit des Ventils 46 Feuchtigkeit nicht direkt über den Antriebsaufnahmeraum 48 in das Innere des Aufnahmeraumes 46 eintreten kann. In diesem Beispiel ist das Anschlusselement 60 fest mit dem Antriebsmotor 28 verbunden. Es ist jedoch zu verstehen, dass auch hier eine zusätzliche Steckverbindung vorgesehen sein könnte.

Der Antriebsaufnahmeraum 58 mit dem eingesetzten Antriebsmotor 28 ist nach außen von einer Abdeckkappe 68 überdeckt. Die Abdeckkappe 68 überdeckt dabei auch das Anschlusselement 60.

In den gezeigten Ausführungsbeispielen dient jeweils ein Lastmodul 4 zur Steuerung eines Heiz- bzw. Kühlkreises und weist dazu ein Ventil 26 oder gegebenenfalls eine Pumpe auf. Es ist jedoch zu verstehen, dass auch Lastmodule 4 vorgesehen sein können, welche zur Steuerung mehrerer Lastkreise ausgebildet sind und dazu in einem Modulgehäuse 16 mehrere Ventile 26 beinhalten. Dann ist vorzugsweise für jedes der Ventile eine einzelne Modulsteuereinrichtung vorgesehen. Alternativ kann eine gemeinsame Modulsteuereinrichtung vorgesehen sein, welche mehrere Ventile 26 bzw. deren Antriebsmotoren 28 individuell ansteuert, wobei die Steuerbefehle vorzugsweise von dem Hauptmodul und der in dessen Elektronikgehäuse angeordneten Verteiler-Steuereinrichtung an die Modulsteuereinrichtung über die beschriebenen elektrischen Kontakte übertragen werden können. Auch zwischen derartigen Lastmodulen 4, welche zur Steuerung mehrerer Lastkreise ausgebildet sind, können elektrische Verbindungen in der vorangehend beschriebenen Weise angeordnet sein, sodass diese Lastmodule 4 aneinander gereiht bzw. gesteckt werden können, um den hydraulischen Verteiler auszubilden.

In den hier gezeigten Ausführungsbeispielen weist jedes Lastmodul 4 zwei Strömungswege, nämlich den ersten Strömungsweg 18 und den zweiten Strömungsweg 20 auf. Es wäre jedoch denkbar, in entsprechender Weise einen hydraulischen Verteiler aufzubauen, welcher mehr oder weniger als zwei Strömungswege aufweist. So könnte beispielsweise der zweite Strömungsweg 20 entfallen und entsprechende hydraulische Verbindungen der angeschlossenen Lastkreise könnten in einem separaten hydraulischen Verteiler erfolgen.

### Bezugszeichenliste

- 2: - Hauptmodul
- 4: - Lastmodule
- 6: - Abschlussmodul
- 8: - Eingang
- 10: - Ausgang
- 12: - Umwälzpumpenaggregat
- 14: - Elektronikgehäuse
- 16: - Modulgehäuse
- 18: - erster Strömungsweg
- 20: - zweiter Strömungsweg
- 22: - erster hydraulischer Anschluss
- 24: - zweiter hydraulischer Anschluss
- 26: - Ventil
- 28: - Antriebsmotor
- 30: - Spindeltrieb
- 32: - Ventilelement
- 33: - Ventilsitz
- 34: - erstes Ende
- 36: - zweites Ende
- 38: - erste hydraulische Kupplung
- 40: - zweite hydraulische Kupplung
- 42: - mechanische Verbindung
- 44: - Leiterplatte
- 46: - Aufnahmeraum
- 48: - Deckel
- 50: - erste elektrische Steckkupplung
- 52: - zweite elektrische Steckkupplung
- 53: - Sensor
- 54: - elastischer Abschnitt
- 56: - Einschnitte
- 58: - Antriebsaufnahmeraum
- 60: - Anschlusselement
- 62: - dritte Steckkupplung
- 64: - Steckkontakte
- 66: - Öffnung
- 68: - Abdeckkappe

## Patentansprüche

1. Hydraulischer Verteiler für ein hydraulisches Heizungs- und/oder Kühlsystem, welcher modular aufgebaut ist mit einem Hauptmodul (2) und zumindest einem mit dem Hauptmodul (2) verbindbaren Lastmodul (4), welches zumindest einen hydraulischen Anschluss (22, 24) für einen Lastkreis und zumindest eine Reguliereinrichtung (26, 28) zum Regulieren des Durchflusses durch den an dem hydraulischen Anschluss (22) angeschlossenen Lastkreis aufweist sowie zur Verbindung mit einem weiteren identisch ausgebildeten Lastmodul (4) ausgebildet ist,
**dadurch gekennzeichnet, dass**
das zumindest eine Lastmodul (4) eine sich zwischen einem ersten (34) und einem zweiten Ende (36) des Lastmoduls (4) erstreckende Leiterplatte (44) aufweist, welche an ihrem ersten (34) und zweiten Ende (36) zueinander derart korrespondierende elektrische Kupplungen (50, 52) aufweist, dass die elektrische Kupplung (52) am zweiten Ende (36) der Leiterplatte (44) mit einer elektrischen Kupplung (50) am ersten Ende (34) eines weiteren identischen Lastmoduls (4) elektrisch leitend in Eingriff treten kann.

2. Hydraulischer Verteiler nach Anspruch 1, **dadurch gekennzeichnet, dass** eine der beiden elektrischen Kupplungen (50) an dem ersten und dem zweiten Ende weibliche Kontakte und die andere elektrische Kupplung (52) korrespondierende männliche Kontakte aufweist.

3. Hydraulischer Verteiler nach Anspruch 1 oder 2, **dadurch gekennzeichnet, dass** die Leiterplatte (44) in ihrer Erstreckungsrichtung zwischen dem ersten (34) und dem zweiten (36) Ende federnd ausgebildet ist.

4. Hydraulischer Verteiler nach Anspruch 3, **dadurch gekennzeichnet, dass** die Leiterplatte einen mäanderförmigen (54) Abschnitt aufweist, welcher die federnde Ausbildung bewirkt.

5. Hydraulischer Verteiler nach einem der vorangehenden Ansprüche, **dadurch gekennzeichnet, dass** die Leiterplatte (44) mit der Reguliereinrichtung (26, 28), vorzugsweise mittels einer Steckverbindung (62, 64), elektrisch verbunden ist.

6. Hydraulischer Verteiler nach einem der vorangehenden Ansprüche, **dadurch gekennzeichnet, dass** die Leiterplatte (44) eine elektronische Modulsteuereinrichtung trägt, welche zur Kommunikation mit einer Verteiler-Steuereinrichtung, welche vorzugsweise in dem Hauptmodul (2) angeordnet ist, und zur Ansteuerung der Reguliereinrichtung (26, 28) ausgebildet ist.

7. Hydraulischer Verteiler nach einem der vorangehenden Ansprüche, **dadurch gekennzeichnet, dass** die elektrischen Kupplungen (50, 52) an dem ersten (34) und dem zweiten Ende (36) über die Leiterplatte (44) derart verbunden sind, dass elektrische Signale von der elektrischen Kupplung (50) an einem der Enden zu der elektrischen Kupplung (52) an dem anderen Ende durchgeleitet werden.

8. Hydraulischer Verteiler nach einem der vorangehenden Ansprüche, **dadurch gekennzeichnet, dass** in dem Lastmodul (4) zumindest ein Sensor angeordnet ist, welcher mit der Leiterplatte (44) elektrisch verbunden ist.

9. Hydraulischer Verteiler nach einem der vorangehenden Ansprüche, **dadurch gekennzeichnet, dass** das zumindest eine Lastmodul (2) ein Modulgehäuse (16) aufweist, in welchem ein Aufnahmeraum (46) ausgebildet ist, in welchen die Leiterplatte (44) eingesetzt ist, wobei der Aufnahmeraum (46) an den beiden Enden Kupplungsöffnungen aufweist, durch welche die elektrischen Kupplungen (50, 52) sich nach außen erstrecken oder von außen zugänglich sind.

10. Hydraulischer Verteiler nach Anspruch 9, **dadurch gekennzeichnet, dass** in dem Modulgehäuse (16) zumindest ein hydraulischer Strömungsweg (18, 20) ausgebildet und dass der Aufnahmeraum (46) für die Leiterplatte (44) von dem hydraulischen Strömungsweg (18, 20) getrennt ist.

11. Hydraulischer Verteiler nach Anspruch 10, **dadurch gekennzeichnet, dass** das Modulgehäuse (16) einen mit dem hydraulischen Strömungsweg (18) verbundenen Antriebsaufnahmeraum (58) aufweist, in welchem die Reguliereinrichtung (26, 28) angeordnet ist.

12. Hydraulischer Verteiler nach einem der Ansprüche 9 bis 11, **dadurch gekennzeichnet, dass** die Reguliereinrichtung (26, 28) mit der Leiterplatte (44) über ein außerhalb des Modulgehäuses (16) angeordnetes Anschlusselement (60) elektrisch verbunden ist, wobei der Aufnahmeraum (46) für die Leiterplatte (44) vorzugsweise eine Anschlussöffnung (66) aufweist, durch welche das Anschlusselement (60) sich zu der Leiterplatte (44) erstreckt.

13. Hydraulischer Verteiler nach einem der vorangehenden Ansprüche, **dadurch gekennzeichnet, dass** die Reguliereinrichtung (26, 28) ein elektrisch angetriebenes Ventil oder eine elektrisch angetriebene Pumpe ist.

14. Hydraulischer Verteiler nach einem der vorangehenden Ansprüche, **dadurch gekennzeichnet, dass** das zumindest eine Lastmodul (4) zumindest einen sich von dem ersten (34) zu dem zweiten (36) Ende erstreckenden Strömungsweg (18) aufweist, welcher über die Reguliereinrichtung (26, 28) mit dem zumindest einen hydraulischen Anschluss (22) verbunden ist.

15. Hydraulischer Verteiler nach Anspruch 14, **dadurch gekennzeichnet, dass** das Lastmodul (4) einen ersten hydraulischen Strömungsweg (18) und einen zweiten hydraulischen Strömungsweg (20) aufweist, welche sich jeweils von dem ersten (34) zu dem zweiten Ende (36) erstrecken und jeweils mit einem hydraulischen Anschluss (22, 24) des Lastmoduls (4) zum Anschluss eines Lastkreises in Verbindung stehen.

16. Hydraulischer Verteiler nach Anspruch 14 oder 15, **dadurch gekennzeichnet, dass** der zumindest eine Strömungsweg (18, 20) an dem ersten Ende in einer ersten hydraulischen Kupplung (38) endet und an dem zweiten Ende in einer zweiten hydraulischen Kupplung (40) endet und die erste (38) und die zweite (40) hydraulische Kupplung derart korrespondierend zueinander ausgebildet sind, dass die zweite hydraulische Kupplung (40) am zweiten Ende des Lastmoduls (4) mit der ersten hydraulischen Kupplung (38) am ersten Ende eines identisch ausgebildeten zweiten Lastmoduls (4) fluidleitend verbindbar ist.

## Claims

1. A hydraulic manifold for a hydraulic heating and/or cooling system and which is constructed in a modular manner with a main module (2) and at least one load module (4) which is connectable to the main module (2) and which comprises at least one hydraulic connection (22, 24) for a load circuit, and at least one closed-loop control device (26, 28) for the closed-loop control of the flow through the load circuit connected to the hydraulic connection (22) as well as for connection to a further identically designed load module (4),
**characterised in that**
the at least one load module (4) comprises a circuit board (44) which extends between a first (34) and a second end (36) of the load module (4) and which at its first (34) and second axial end (36) comprises electrical couplings (50, 52) which correspond to one another in a manner such that the electrical coupling (52) at the second axial end (36) of the circuit board (44) can electrically conductively engage with an electrical coupling (50) at the first end (34) of a further identical load module (4).

2. A hydraulic manifold according to claim 1, **characterised in that** one of the two electrical couplings (50) at the first and the second axial end comprises female contacts, and the other electrical coupling (52) comprises corresponding male contacts.

3. A hydraulic manifold according to claim 1 or 2, **characterised in that** the circuit board (44) in its extension direction is designed in a resilient manner between the first (34) and second (36) end.

4. A hydraulic manifold according to claim 3, **characterised in that** the circuit board has a meandering (54) section which effects the resilient design.

5. A hydraulic manifold according to one of the preceding claims, **characterised in that** the circuit board (44) is electrically connected to the closed-loop control device (26, 28), preferably by way of a plug-in connection (62, 64).

6. A hydraulic manifold according to one of the preceding claims, **characterised in that** the circuit board (44) carries an electronic module control device which is designed for communication with a manifold control device which is preferably arranged in the main module (2) and is designed for the activation of the closed-loop control device (26, 28).

7. A hydraulic manifold according to one of the preceding claims, **characterised in that** the electrical couplings (50, 52) on the first (34) and the second end (36) are connected via the circuit board (44) in a manner such that electrical signals are led through from the electrical coupling (50) on one of the ends to the electrical coupling (52) at the other end.

8. A hydraulic manifold according to one of the preceding claims, **characterised in that** at least one sensor which is electrically connected to the circuit board (44) is arranged in the load module (4).

9. A hydraulic manifold according to one of the preceding claims, **characterised in that** the at least one load module (2) comprises a module housing (16), in which a receiving space (46) is formed, into which receiving space the circuit board (44) is inserted, wherein the receiving space (46) at both ends comprises coupling openings, through which the electrical couplings (50, 52) extend outwards or are accessible from the outside.

10. A hydraulic manifold according to claim 9, **characterised in that** at least one hydraulic flow path (18, 20) is formed in the module housing (16) and that the receiving space (46) for the circuit board (44) is separated from the hydraulic flow path (18, 20).

11. A hydraulic manifold according to claim 10, **characterised in that** the module housing (16) comprises a drive receiving space (58) which is connected to the hydraulic flow path (18) and in which the closed-loop control device (26, 28) is arranged.

12. A hydraulic manifold according to one of the claims 9 to 11, **characterised in that** the closed-loop control device (26, 28) is electrically connected to the circuit board (44) via a connection element (60) which is arranged outside the module housing (16), wherein the receiving space (46) for the circuit board (44) preferably comprises a connection opening (66), through which the connection element (60) extends to the circuit board (44).

13. A hydraulic manifold according to one of the preceding claims, **characterised in that** the closed-loop control device (26, 28) is an electrically operated valve or an electrically operated pump.

14. A hydraulic manifold according to one of the preceding claims, **characterised in that** the at least one load module (4) comprises at least one flow path (18) which extends from the first (34) to the second (36) end and which is connected via the closed-loop control device (26, 28) to the at least one hydraulic connection (22).

15. A hydraulic manifold according to claim 14, **characterised in that** the load module (4) comprises a first hydraulic flow path (18) and a second hydraulic flow path (20) which in each case extend from the first (34) to the second end (36) and are in each case in connection with a hydraulic connection (22, 24) of the load module (4) for the connection of a load circuit.

16. A hydraulic manifold according to claim 14 or 15, **characterised in that** the at least one flow path (18, 20) at the first end ends in a first hydraulic coupling (38) and at the second end ends in a second hydraulic coupling (40), and the first (38) and the second (40) hydraulic coupling are designed corresponding to one another in a manner such that the second hydraulic coupling (40) at the second end of the load module (4) can be connected in a fluid-leading manner to the first hydraulic coupling (38) at the first end of an identically designed second load module (4).

## Revendications

1. Répartiteur hydraulique pour un système hydraulique de chauffage et/ou de réfrigération, lequel est configuré de manière modulaire avec un module principal (2) et au moins un module de charge (4) susceptible d'être relié au module principal (2) et comprenant au moins un élément de raccordement hydraulique (22, 24) pour un circuit de charge et au moins un dispositif de régulation (26, 28) pour réguler le flux passant par le circuit de charge raccordé à l'élément de raccordement hydraulique (22) et étant configuré pour le raccordement à un autre module de charge (4) conçu de façon identique,
**caractérisé en ce que**
ledit au moins un module de charge (4) comprend un circuit imprimé (44) s'étendant entre une première (34) et une seconde (36) extrémité du module de charge (4) et comprenant à sa première (34) et sa seconde (36) extrémité des moyens de couplage électriques (50, 52) correspondant l'un à l'autre de façon telle que le moyen de couplage électrique (52) à la seconde extrémité (36) du circuit imprimé (44) puisse être mise en prise de façon électriquement conductrice avec un moyen de couplage électrique (50) à la première extrémité (34) d'un autre module de charge (4) identique.

2. Répartiteur hydraulique selon la revendication 1, **caractérisé en ce que** l'un (50) des deux moyens de couplage électriques à la première et la seconde extrémité comprend des contacts femelles et l'autre moyen de couplage électrique (52) comprend des contacts mâles correspondants.

3. Répartiteur hydraulique selon la revendication 1 ou 2, **caractérisé en ce que** le circuit imprimé (44) est configuré, dans la direction de son étendu, entre la première (34) et la seconde (36) extrémité, de façon résiliente.

4. Répartiteur hydraulique selon la revendication 3, **caractérisé en ce que** le circuit imprimé comprend une partie (54) en méandre qui produit la configuration résiliente.

5. Répartiteur hydraulique selon l'une des revendications précédentes, **caractérisé en ce que** le circuit imprimé (44) est relié électriquement au dispositif de régulation (26, 28), de préférence, à l'aide d'une connexion à enfichage (62, 64).

6. Répartiteur hydraulique selon l'une des revendications précédentes, **caractérisé en ce que** le circuit imprimé (44) porte un dispositif électronique de commande de module qui est configuré pour la communication avec un dispositif de commande de répartiteur disposé, de préférence, dans le module principal (2) et pour l'asservissement du dispositif de régulation (26, 28).

7. Répartiteur hydraulique selon l'une des revendications précédentes, **caractérisé en ce que** les moyens de couplage électriques (50, 52) à la première (34) et la seconde (36) extrémité sont reliés l'un à l'autre par le circuit imprimé (44) de façon que des signaux électriques puissent être acheminés du moyen de couplage électrique (50) à l'une des extrémités au moyen de couplage électrique (52) à l'autre extrémité.

8. Répartiteur hydraulique selon l'une des revendications précédentes, **caractérisé en ce qu'**il est disposé dans le module de charge (4), au moins un capteur qui est relié électriquement au circuit imprimé (44).

9. Répartiteur hydraulique selon l'une des revendications précédentes, **caractérisé en ce que** ledit au moins un module de charge (2) comprend un boîtier de module (16) dans lequel est formé un espace de réception (46) dans lequel est inséré le circuit imprimé (44), l'espace de réception (46) comprenant aux deux extrémités des ouvertures de couplages au travers desquels les moyens de couplage électriques (50, 52) s'étendent vers l'extérieur ou sont accessibles de l'extérieur.

10. Répartiteur hydraulique selon la revendication 9, **caractérisé en ce que**, dans le boîtier de module (16), est formé au moins un trajet de flux hydraulique (18, 20) et **en ce que** l'espace de réception (46) pour le circuit imprimé (44) est séparé du trajet de flux hydraulique (18, 20).

11. Répartiteur hydraulique selon la revendication 10, **caractérisé en ce que** le boîtier de module (16) comprend un espace de réception d'entraînement (58) relié au trajet de flux hydraulique (18), dans lequel est disposé le dispositif de régulation (26, 28).

12. Répartiteur hydraulique selon l'une des revendications 9 à 11, **caractérisé en ce que** le dispositif de régulation (26, 28) est relié électriquement au circuit imprimé (44) par un élément de raccordement (60) disposé à l'extérieur du boîtier de module (16), l'espace de réception (46) pour le circuit imprimé (44) comprenant, de préférence, une ouverture de raccordement (66) au travers de laquelle l'élément de raccordement (60) s'étend jusqu'au circuit imprimé (44).

13. Répartiteur hydraulique selon l'une des revendications précédentes, **caractérisé en ce que** le dispositif de régulation (26, 28) est une valve entraînée électriquement ou une pompe entraînée électriquement.

14. Répartiteur hydraulique selon l'une des revendications précédentes, **caractérisé en ce que** ledit au moins un module de charge (4) comprend au moins un trajet de flux hydraulique (18) s'étendant de la première (34) à la seconde (36) extrémité, lequel est relié, via le dispositif de régulation (26, 28), audit au moins un élément de raccordement hydraulique (22).

15. Répartiteur hydraulique selon la revendication 14, **caractérisé en ce que** le module de charge (4) comprend un premier trajet de flux hydraulique (18) et un deuxième trajet de flux hydraulique (20) qui s'étendent chacun de la première (34) à la seconde (36) extrémité et qui sont reliés chacun avec un élément de raccordement hydraulique (22, 24) du module de charge (4), pour le raccordement d'un circuit de charge.

16. Répartiteur hydraulique selon la revendication 14 ou 15, **caractérisé en ce que** ledit au moins un trajet de flux (18, 20) aboutit à la première extrémité dans un premier moyen de couplage hydraulique (38) et aboutit à la seconde extrémité dans un deuxième moyen de couplage hydraulique (40) et **en ce que** le premier (38) et le deuxième (40) moyen de couplage sont configurés l'un par rapport à l'autre de manière correspondante de façon que le deuxième moyen de couplage hydraulique (40) à la seconde extrémité du module de charge (4) puisse être raccordé de façon conductrice de fluide au premier moyen de couplage hydraulique (38) à la première extrémité d'un deuxième module de charge (4) configuré de manière identique.
